# EUROPEAN PATENT SPECIFICATION

(11) **EP 2 909 891 B1**
(45) Date of publication and mention of the grant of the patent: **20.11.2019**
(21) Application number: 13783181.4
(22) Date of filing: 11.10.2013
(51) Int. Cl.: H01R 4/48, H01R 9/05, H01R 24/40, H02G 15/02, H01R 103/00

(54) **COAXIAL CABLE CONNECTOR WITH A COMPRESSIBLE FERRULE**
KOAXIALKABELSTECKER MIT EINER KOMPRIMIERBAREN HÜLSE
CONNECTEUR DE CÂBLE COAXIAL AVEC FERRULE COMPRESSIBLE

(30) Priority: 16.10.2012 US 201261714504 P; 20.11.2012 US 201261728474 P; 12.03.2013 US 201313795780
(43) Date of publication of application: 26.08.2015
(73) Proprietor: Corning Optical Communications RF LLC, Glendale, AZ 85301 (US)
(72) Inventor: BURRIS, Donald Andrew, Peoria, Arizona 85345 (US); CLAUSEN, Jan Michael, DK-4760 Vordingborg (DK); FEESE, Kenneth Albert, Tempe, Arizona 85283 (US); KISLING, Brian Lyle, Phoenix, Arizona 85021 (US); MATZEN, Michael Ole, DK-4760 Vordingborg (DK); MILLER, Thomas Dewey, Peoria, Arizona 85383 (US)
(74) Representative: Sturm, Christoph
(86) International application number: PCT/US2013/064515
(87) International publication number: WO 2014/062500

(56) References cited:
- GB-A- 2 448 595
- US-A- 6 089 912
- US-A1- 2010 178 799
- US-B1- 7 857 661

## Description

### RELATED APPLICATIONS

This application is related to U.S. Application No. 13/198,765, filed August 5, 2011.

This application is related to U.S. Application No. 13/653,095, filed October 16, 2012.

This application is related to U.S. Application No. 13/652,969, filed October 16, 2012.

### BACKGROUND

### Field of the Disclosure

The disclosure relates generally to coaxial cable connectors, and particularly to a coaxial cable connector having a compressible.

### Technical Background

Coaxial cable connectors such as F-connectors are used to attach coaxial cables to another object such as an appliance or junction having a terminal adapted to engage the connector. Coaxial cable F-connectors are often used to terminate a drop cable in a cable television system. The coaxial cable typically includes a center conductor surrounded by a dielectric, in turn surrounded by a conductive grounding foil and/or braid (hereinafter referred to as a conductive grounding sheath); the conductive grounding sheath is itself surrounded by a protective outer jacket. The F-connector is typically secured over the prepared end of the jacketed coaxial cable, allowing the end of the coaxial cable to be connected with a terminal block, such as by a threaded connection with a threaded terminal of a terminal block.

Crimp style F-connectors are known wherein a crimp sleeve is included as part of the connector body. A special radial crimping tool, having jaws that form a hexagon, is used to radially crimp the crimp sleeve around the outer jacket of the coaxial cable to secure such a crimp style F-connector over the prepared end of the coaxial cable.

Still another form of F-connector is known wherein an annular compression sleeve is used to secure the F-connector over the prepared end of the cable. Rather than crimping a crimp sleeve radially toward the jacket of the coaxial cable, these F-connectors employ a plastic annular compression sleeve that is initially attached to the F-connector, but which is detached therefrom prior to installation of the F-connector. The compression sleeve includes an inner bore for following such compression sleeve to be passed over the end of the coaxial cable prior to installation of the F-connector. The end of the coaxial cable must be prepared by removing a portion of the outer braid and/or folding the outer braid back over the cable jacket. The F-connector itself is then inserted over the prepared end of the coaxial cable. Next, the compression sleeve is compressed axially along the longitudinal axis of the connector into the body of the connector, simultaneously compressing the jacket of the coaxial cable between the compression sleeve and the tubular post of the connector. An example of such a compression sleeve F-connector is shown in U.S. Pat. No. 4,834,675 to Samchisen A number of commercial tool manufacturers provide compression tools for axially compressing the compression sleeve into such connectors.

Collars or sleeves within a coaxial cable connector can be compressed inwardly against the outer surface of a coaxial cable to secure a coaxial cable connector thereto. For example, in U.S. Pat. No. 4,575,274 to Hayward, a connector assembly for a signal transmission system is disclosed wherein a body portion threadedly engages a nut portion. The nut portion includes an internal bore in which a ferrule is disposed, the ferrule having an internal bore through which the outer conductor of a coaxial cable is passed. As the nut portion is threaded over the body portion, the ferrule is wedged inwardly to constrict the inner diameter of the ferrule, thereby tightening the ferrule about the outer surface of the cable. However, the connector shown in the Hayward '274 patent cannot be installed by a simple crimp or compression tool; rather, the mating threads of such connector must be tightened, as by using a pair of wrenches. Additionally, the end of the coaxial cable must be prepared by stripping back the outer jacket to expose the conductive grounding sheath and center conductor, then further requires that the conducting grounding sheath be folded back, or everted, all of which takes time, tools, and patience.

US 2010/178799 A1 discloses a connector according to the preamble of claim 1. Other prior art is disclosed by GB 2 448 595 A and by US 7 857 661 B1.

US 6 089 912 A discloses a post-less coaxial cable connector having a collar, a sleeve, a retaining ring, a coupler and a nut. The sleeve is press fit into the collar.

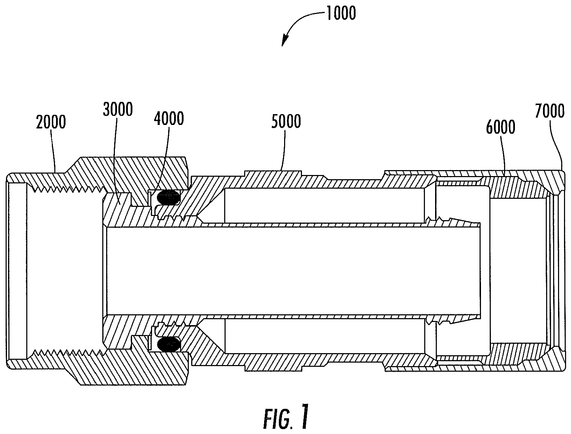

**Figure 1** illustrates connector **1000** having coupler **2000,** separate post **3000,** separate continuity member **4000,** and body **5000.** In connector **1000,** continuity member **4000** is captured between post **3000** and body **5000** and contacts at least a portion of coupler **2000.** Coupler **2000** is preferably made of metal, such as brass and plated with a conductive material such as nickel. Post **3000** is preferably made of metal, such as brass, and plated with a conductive material such as tin. Continuity member **4000** is preferably made of metal such as phosphor bronze and plated with a conductive material such as tin. Body **5000** is preferably made of metal such as brass and plated with a conductive material such as nickel.

### SUMMARY OF THE DETAILED DESCRIPTION

A coaxial connector according to the invention is defined in claim 1.

The coaxial connector may further comprise a retainer that has an external surface and engages the body and rotatably engages the coupler. The retainer further has an internal surface in mechanical and electrical communication with a ferrule. A shell has an outer surface and an internal surface, with the internal surface defining an opening through the shell. The internal surface slidingly engages at least a portion of the rear end of the body. A sealing ring is disposed within the shell and engages the rear end of the body. The sealing ring has an internal surface. Upon compression of the coaxial cable connector the sealing ring engages the jacket of the coaxial cable.

Alternatively, upon compression of the coaxial cable connector, the shell may push the sealing ring against the rear end of the body, causing the sealing ring to be compressed both axially and radially and a portion thereof to engage the outer jacket of the coaxial cable. The coaxial cable connector may include a coupling portion rotatably engaging the front end of the retainer. The coaxial cable connector may include a coupling portion rotatably engaging the front end of the body. The shell radially compresses the rear end of the coaxial cable connector body. The coaxial cable connector is post-less.

Additional features and advantages are set out in the detailed description which follows, and in part will be readily apparent to those skilled in the art from that description or recognized by practicing the embodiments as described herein, including the detailed description, the claims, as well as the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate one or more embodiment(s), and together with the description serve to explain principles and operation of the various embodiments.

### BRIEF DESCRIPTION OF THE DRAWINGS

**Figure 1** is a side cross sectional view of a coaxial cable connector;
**Figure 2** is a partial cross section of a coaxial cable useful for description of the various cable components;
**Figure 2A** is a partial cross section of a partially prepared coaxial cable;
**Figure 2B** is a partial cross section of a prepared coaxial cable;
**Figure 3** is a partial cross section of acoaxial connector utilizing a post with a coaxial cable partially installed;
**Figure 3A** is a partial cross section of a coaxial connector utilizing a post with a coaxial cable further partially installed;
**Figure 4** is a cross sectional view of one embodiment of a coaxial cable connector according to an exemplary embodiment;
**Figure 5** is a partial cross section of a partially installed prepared coaxial cable using one method of preparation according to an exemplary embodiment;
**Figure 5A** is a partial cross section of a further partially installed prepared coaxial cable using one method of preparation according to an exemplary embodiment;
**Figure 6** is a partial cross section of the coaxial cable connector of **Figure 4** in an uncompressed or open condition with the prepared coaxial cable of **Figure 2A** inserted therein;
**Figures 6A** is a partial cross section of the coaxial cable connector and prepared coaxial cable of **Figure 2A** in a final stage of compression.
**Figure 7** is a cross section of a ferrule component;
**Figure 7A** is an end schematic view of the ferrule component of **Figure** 7 useful for description of the various component constituents;
**Figure 7B** is an isometric view of the ferrule component of **Figure** 7 useful for description of the various component constituents
**Figure 8** is a cross section of a ferrule component according to an exemplary embodiment;
**Figure 8A** is an end schematic view of the ferrule component of **Figure 8** useful for description of the various component constituents;
**Figure 9** is a cross section view of an embodiment of a coaxial cable connector an uncompressed state with the cable shown partially inserted wherein the ferrule alternatively engages the cable jacket;
**Figure 10** is a cross section view of an alternate embodiment of a coaxial cable connector in an uncompressed state wherein a compression ring forms the body radially inwardly;
**Figure 10A** is a cross section view of an alternate embodiment of a coaxial cable connector in an compressed state having a cable installed wherein a compression ring forms the body radially inwardly
**Figure 11** is a cross section view of an alternate embodiment of a coaxial cable connector;
**Figure 12** is a schematic end view of a component of the connector of **Figure 11****;**
**Figure 12A** is a cross section view of a component of the connector of **Figure 11****;**
**Figure 13** is a cross section view of an alternate embodiment of a coaxial cable connector that does not require a compression tool to close the connector; and

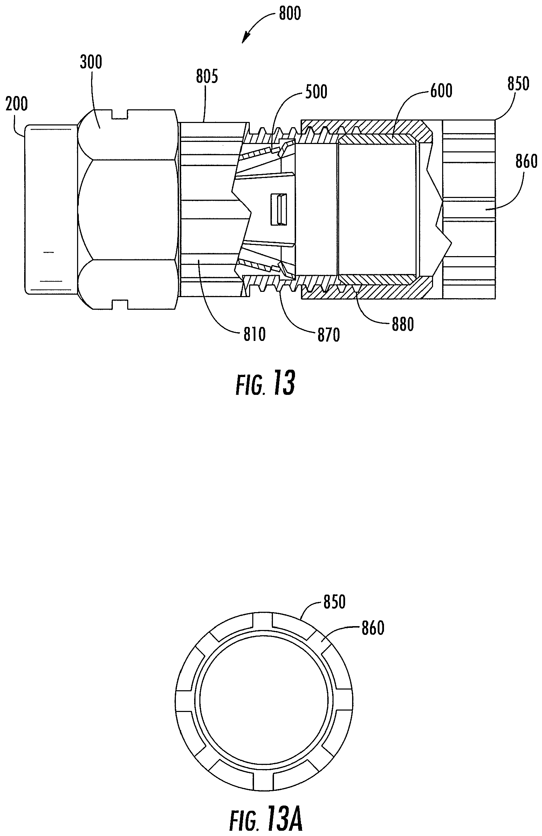

**Figure 13** **A** is a schematic end view of a component of the connector of **Figure 13****.**

### DETAILED DESCRIPTION

Reference will now be made in detail to the embodiments, examples of which are illustrated in the accompanying drawings, in which some, but not all embodiments are shown. Indeed, the concepts may be embodied in many different forms and should not be construed as limiting herein. Rather, these embodiments are provided so that this disclosure will satisfy applicable legal requirements. Whenever possible, like reference numbers will be used to refer to like components or parts.

Coaxial cable connectors are used to couple a prepared end of a coaxial cable to a threaded female equipment connection port of an appliance. The coaxial cable connector may have a post, a moveable post or be postless. In each case, though, in addition to providing an electrical and mechanical connection between the conductor of the coaxial connector and the conductor of the female equipment connection port, the coaxial cable connector provides a ground path from an outer conductor of the coaxial cable to the equipment connection port. The outer conductor may be, as examples, a conductive foil or a braided sheath. Maintaining a stable ground path protects against the ingress of undesired radio frequency ("RF") signals which may degrade performance of the appliance. This is especially applicable when the coaxial cable connector is not fully tightened to the equipment connection port, either due to not being tightened upon initial installation or due to becoming loose after installation.

For purposes of this description, the term "forward" will be used to refer to a direction toward the portion of the coaxial cable connector that attaches to a terminal, such as an appliance equipment port. The term "rearward" will be used to refer to a direction that is toward the portion of the coaxial cable connector that receives the coaxial cable. The term "terminal" will be used to refer to any type of connection medium to which the coaxial cable connector may be coupled, as examples, an appliance equipment port, any other type of connection port, or an intermediate termination device.

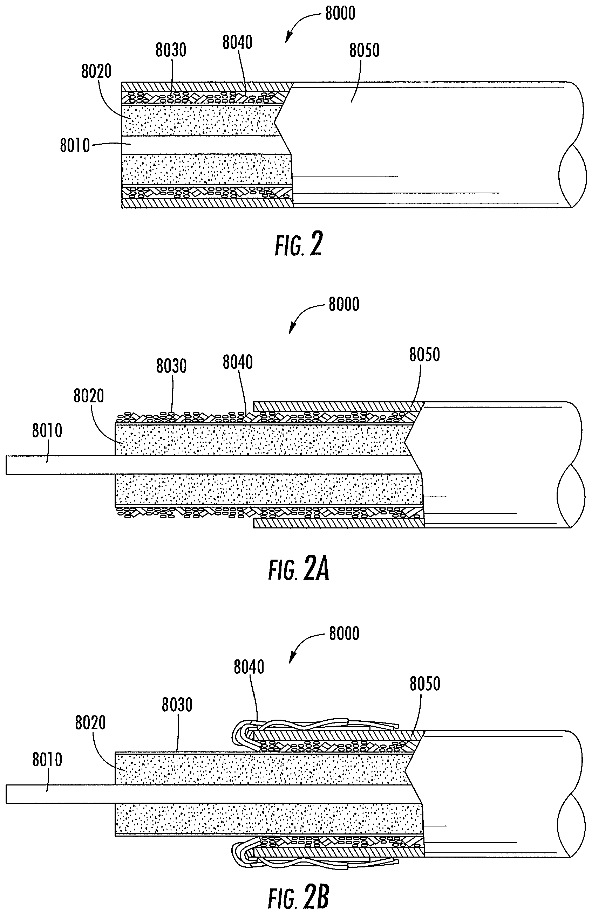

**Figures 2, 2A and 2B****,** illustrate a coaxial cable **8000** and the method in which the end of coaxial cable **8000** is prepared for use with coaxial cable connectors. Referring to **Figure 2****,** coaxial cable **8000** has center conductor **8010** surrounded by a dielectric layer **8020.** Dielectric layer (or dielectric) **8020** may also have a foil or other metallic covering **8030.** Coaxial cable **8000** has a braided outer conductor **8040** which is covered and protected by jacket **8050.** Typically, to prepare coaxial cable **8000** for attachment to a coaxial cable connector, a portion of center conductor **8010** is exposed as illustrated in **Figure 2A****.** Jacket **8050** is trimmed back so that a portion of dielectric **8020** (and metallic covering **8030)** and braided outer conductor **8040** are exposed. Braided outer conductor **8040** is then folded back over jacket **8050** to expose dielectric (and the metallic covering **8030** if present) as shown in **Figure 2B****.**

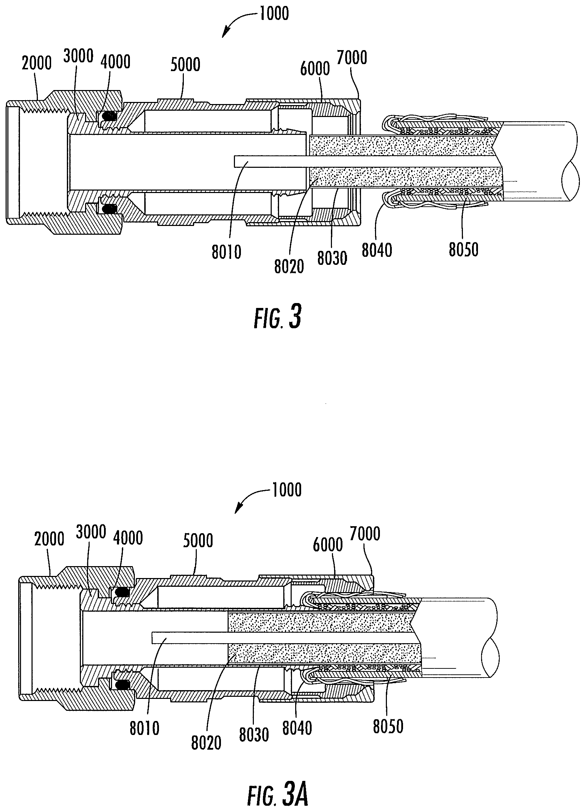

**Figure 3** illustrates prepared coaxial cable of **Figure 2B** partially inserted into coaxial connector **1000.** Inside, body portion **5000** is a post **3000,** which is used to secure coaxial cable **8000** relative to coaxial connector **1000.** As can be seen in **Figure 3****,** dielectric **8020** and metallic covering **8030** are inserted into post **3000.** Post **3000** can cause problems for the coaxial connector **1000** as well as the installer. First, coaxial cable **8000** must be prepared and dielectric **8020** and metallic covering **8030** aligned with and inserted into post **3000.** Second, the post **3000** can skive the dielectric **8020** and metallic covering **8030,** tear the braided outer conductor **8040** or the jacket **8050.** Additionally, it can be difficult to insert the dielectric **8020** and metallic covering **8030** onto post **3000** due to diametral tolerances of both post 3000 and cable. Further, manufacturing burrs or other damage may be present on the cable insertion end of post **3000** causing further difficulty inserting cable dielectric **8020** and metallic covering **8030** into the post.

**Figure 3A** illustrates prepared coaxial cable of **Figure 2B** further partially inserted into a coaxial connector **1000** wherein braided outer conductor **8040** and jacket **8050** must pass over post **3000** and through gripping member **6000** during further insertion of cable **8000** into connector **1000.** With braided outer conductor **8040** folded back over jacket **8050** the outermost dimension of the prepared cable can become relatively large compared to the passageway provided in gripping member **6000.** Additionally, if jacket **8050** is thicker than allowed specification, the outermost dimension of the prepared cable can become relatively even larger compared to passageway provided in gripping member **6000.** All this can make it difficult to insert cable **8000** into connector **1000.**

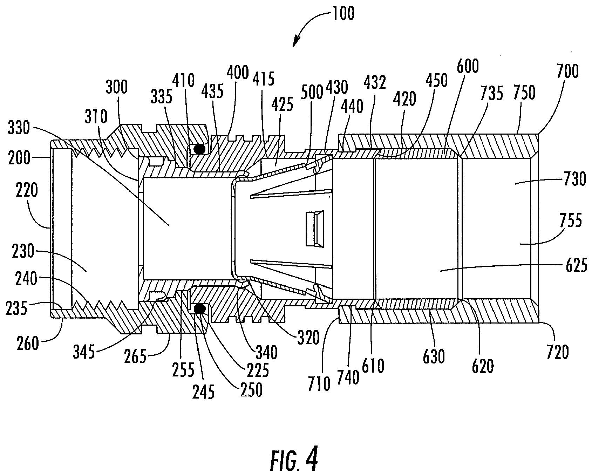

Coaxial cable connector **100** is illustrated in **Figure 4****.** oaxial cable connector **100** has coupling portion **200,** retainer **300,** body **400,** ferrule **500,** sealing member **600,** and a shell **700.** It should be noted that coaxial cable connector **100** does not have a post that engages coaxial cable between the dielectric and the outer conductor as illustrated above. Additionally, sealing member **600** may be a separate and distinct component from the other components of coaxial cable connector **100.** In the embodiment illustrated in **Figure 4****,** coaxial cable connector **100** is post-less.

Coupling portion **200** has front end **220,** back end **225,** and opening **230** extending therebetween. Opening **230** of coupling portion **200** has internal surface **235.** Internal surface **235** includes threaded portion **240** and channel **245,** which is configured to receive elastic ring **250** to seal coaxial cable connector **100.** Coupling portion **200** also has inwardly projecting ring **255** to engage rearward facing shoulder **335** of retainer **300,smooth** outer surface **260** adjacent front end **220** and hexagonal configuration **265** adjacent back end **225.** Coupling portion **200** may be made from any appropriate material, for example, metallic material, such as brass, and may be plated with a conductive, corrosion-resistant material, such as nickel.

Retainer **300** has front end **310** and back end **320** with internal surface **330** extending therebetween. Rearward facing annular surface **335** serves to rotatably retain coupling portion **200.** Barb **340** engages body **400** at step **341**to facilitate locating retainer **300** with respect to body **400.** Retainer **300** may or may not have optional monolithic grounding flange **345.** Retainer **300** may be made from any appropriate material, for example, metallic material, such as brass, and may be plated with a conductive, corrosion-resistant material, such as nickel.

Body **400** has internal surface **415** extending between front end **410** and rear end **420** and defining longitudinal opening **425.** Body **400** also has outer surface **432** disposed proximate back end **420** to engage and retain shell **700,** inner surface **435** to engage retainer **300,** annular groove **440** to retain shell **700,** and internal groove **430** to engage ferrule **500.** Additionally, body **400** has tapered surface **450** proximate rear end **420** serving to shape or form separate and distinct sealing member **600** when shell **700** is advanced over body **400** forcing sealing member **600** under or into the body **400.** Body **400** may be made from any appropriate material, such as, for example, plastic such as acetal.

Sealing member **600** may have front end **610,** rear end **620,** interior passage **625** and an external shape **630** and be disposed within opening **730** of shell **700.** Front end **610** is preferably disposed against rear end **420** of body **400** and rear end **620** is preferably disposed against surface **735** of the shell **700.** Sealing member **600** may be made of any appropriate material, for example, a rubber-like plastic material such as silicone or ethylene propylenediene monomer (EPDM).

Shell **700** has front end **710** and back end **720** with annular ring **740** proximate front end **710** to engage and be retained on body **400** by the annular groove **440.** Shell **700** has outer surface **750** and internal surface **730** defining an opening **755** therethrough. As can be seen in **Figure 4****,** opening **755** is larger at front end **710** than at back end **720** due to forward and inward facing surface **735.** Shell **700** may be made from any appropriate material, for example, plastic.

Returning to **Figures 2A** and **2B****,** coaxial cable **8000** is in a prepared state for use with coaxial cable connector 100. Center conductor **8010** is exposed by removing jacket **8050,** braided outer conductor **8040,** foil or other metallic covering **8030,** and dielectric layer **8020.** A second portion of jacket **8050** may be removed leaving dielectric layer **8020,** foil or other metallic covering **8030,** and braided outer conductor **8040** intact. As discussed above with regard to **Figure 2A** and **2B****,** connector **1000** requires braided outer conductor **8040** be folded back over jacket **8050.**

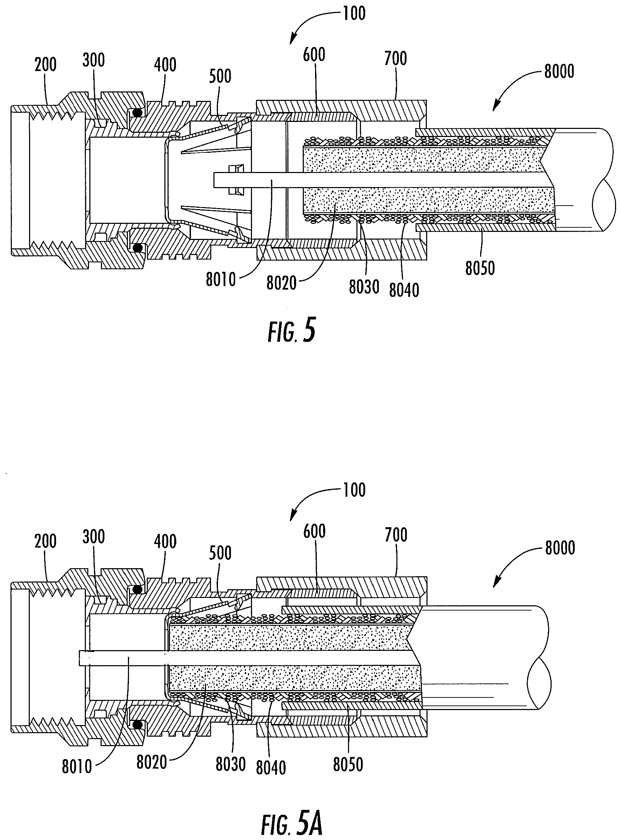

The assembly of coaxial cable connector **100** will now be discussed with reference to **Figures 5-5A****.** As can be seen in **Figure 5****,** prepared coaxial cable **8000** of **Figure 2A** is inserted through opening **755** of shell **700,** sealing member **600,** and partially into the ferrule **500.** Clearance between cable **8000** and connector components is provided to facilitate the cable entering connector **100.** In **Figure 5A****,** cable **8000** and, more specifically, cable dielectric layer **8020,** foil or other metallic covering **8030,** and braided outer conductor **8040** are fully inserted into ferrule **500.**

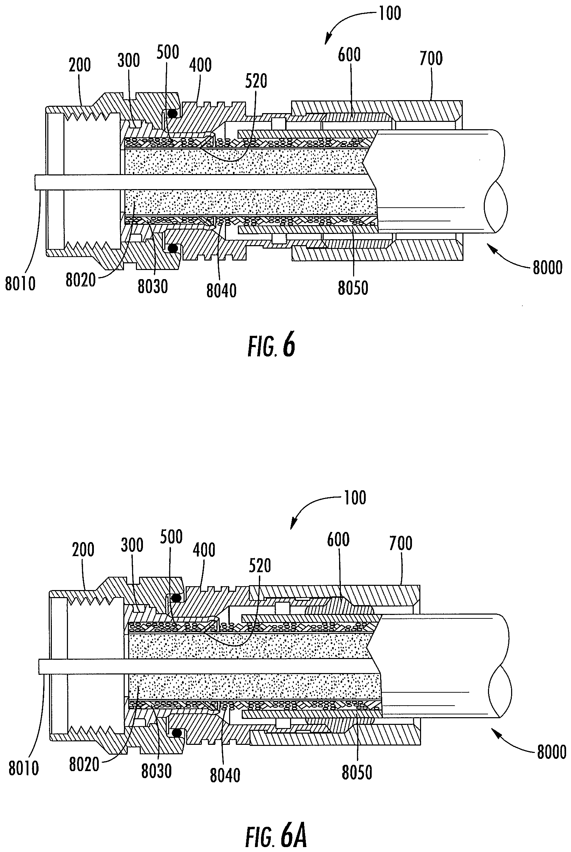

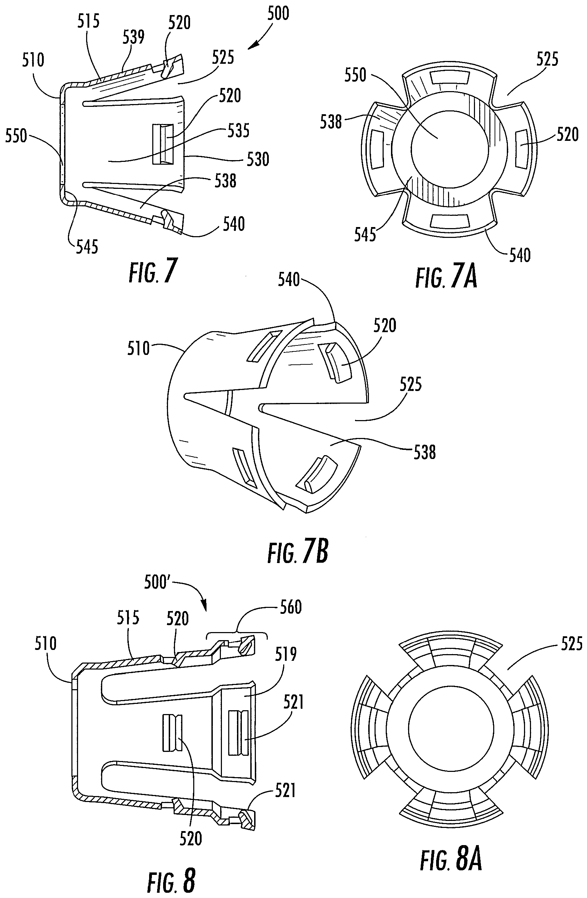

Turning to **Figure 6** and also referencing **Figure 7****,** cable **8000** is further advanced urging ferrule **500** to move forward while causing ferrule beams **515** to be closed radially inwardly about braided outer conductor **8040** forcing internal surface **538** to contact braided outer conductor **8040** while external surface **539** remains in mechanical and electrical communication with retainer **300.** During the closing action, one or more pawls or teeth **520** of ferrule **500** are driven into intimate contact with braided outer conductor **8040** providing both mechanical retention and electrical communication between teeth **520** and braided outer conductor **8040.** Additionally, teeth **520** may be forced through braided outer conductor **8040** and contact the foil or other metallic covering **8030.**

In **Figure 6A****,** axial compression of coaxial cable connector **100** has been completed. As can be seen, shell **700** has been moved axially forward and sealing member **600** has been forced into body **400** and further into shell **700** moving sealing member **600** to a compressed state around cable jacket **8050** both sealing body, shell, and cable junction and gripping cable **8000.**

Turning to **Figures 7** through **7B****,** a detailed description of the constituent features of ferrule **500** provided. Ferrule **500** has front end **510,** back end **530,** and opening **535** extending therebetween. Opening **535** of ferrule **500** has internal surface **538,** which includes teeth **520,** vertical face **545** and through bore **550.** Ferrule **500** also has a multiplicity of slots **525** that permit flaring resulting in flexible beams **515.** Lip **540** engages body groove **430** in shipping position and retainer **300** in closed position. Ferrule **500** may be made from any appropriate material, for example, metallic material, such as brass, and may be plated with a conductive, corrosion-resistant material, such as nickel.

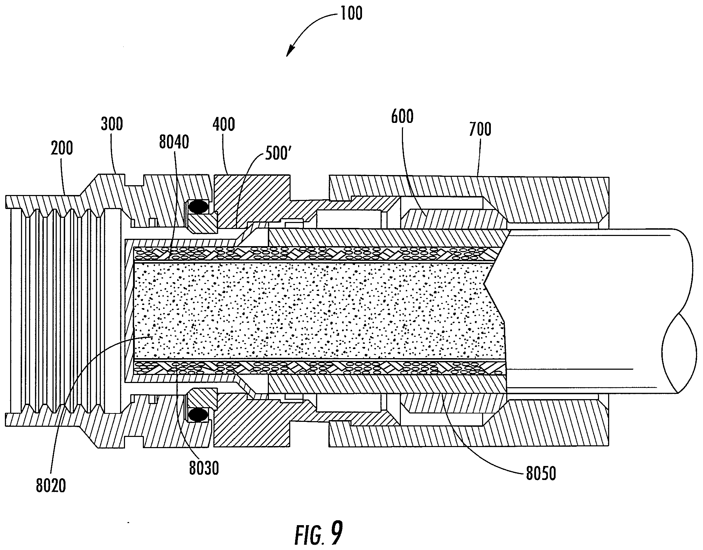

**Figures 8** and **8A** illustrate an alternate embodiment involving ferrule **500'.** Ferrule **500'** differs from the ferrule **500** in that ferrule **500'** has extended portion **560** and inner surface **519** to encompass cable jacket **8050.** Ferrule **500'** has teeth **521** that capture and grip cable jacket **8050** as illustrated in **Figure 9****.**

**Figure 9** depicts connector 100 having ferrule **500',** as described above, and having cable **8000** inserted to urge ferrule **500'** to move forward while causing ferrule beams **515** to close radially inwardly about braided outer conductor **8040** which causes internal surface **538** to contact braided outer conductor **8040** while external surface **539** remains in mechanical and electrical communication with retainer **300.** During the aforementioned closing action, teeth **520** of ferrule **500'** are driven into intimate contact with braided outer conductor **8040** providing both mechanical retention and electrical communication between teeth **520** and braided outer conductor **8040.** Additionally, teeth **520** may be forced through braided outer conductor **8040** and contact foil or other metallic covering **8030.** Extended portion **560** of ferrule **500'** and inner portion **519** engage cable jacket **8050** with teeth **521** capturing and gripping cable jacket **8050**

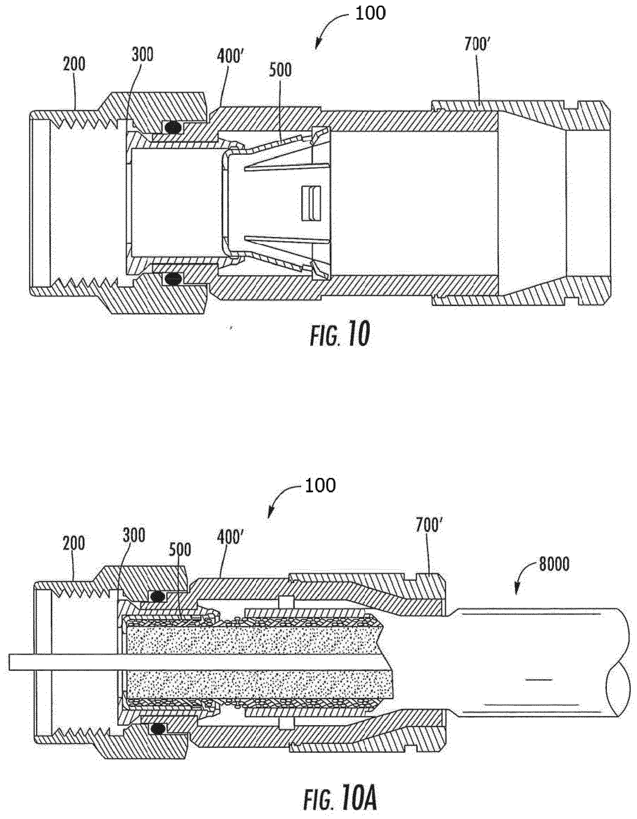

**Figure 10** illustrates coaxial cable connector **100** that eliminates sealing member **600** and employs shell **700'** to compress or radially inwardly form body **400'** around cable **8000** as shown in **Figure 10A****.**

**Figure 10A** illustrates connector **100** with cable **8000** fully inserted and shell **700'** moved forward to compress or radially inwardly form body **400'** around cable **8000.**

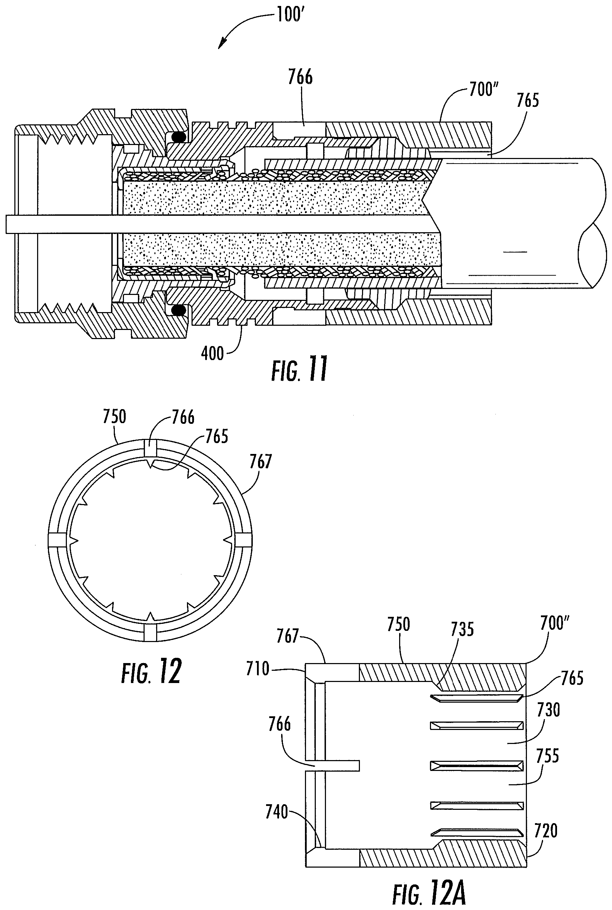

**Figure 11** is a cross section view of a coaxial cable connector **100'** which has splines **765** in the shell **700"** to limit rotational movement of the cable **8000** within the connector **100'.** Slots **766** are illustrated and discussed below.

**Figure 12** and **12A** illustrate views of shell **700".** **Figure 12** is a schematic end view of shell **700"** and **Figure 12A** is a cross sectional view of shell **700".** Shell **700"** comprises internal splines **765** and slots **766.** Slots **766** permit flexible beams **767** to conform to contours of body **400** while maintaining a tight gripping action.

**Figure 13** is a cross sectional view of coaxial cable connector **800** that does not require a compression tool to close connector **800.** Connector **800** has body **805** and shell **850.** Body **805** comprises gripping ribs **810** and external helical inclined plane **870.** Shell **850** comprises gripping ribs **860** and internal helical inclined plane **880** designed to engage and co-act with external helical inclined plane **870** to advance shell **850** over body **805** when shell **850** and body **805** are radially moved relative to one another. The corresponding external helical inclined plane **870** and internal helical inclined plane **880** may be similar to a standardized thread system such as an SAE thread, or an Acme thread requiring multiple revolutions to achieve complete advancement of shell **850** over body **805** or, alternatively, may be more of an elongated spiral in nature requiring less than one full revolution for complete advancement of shell **850** over body **805.**

Alternatively, helical inclined plane system may consist of an external helical inclined plane on body **805** with a single tooth or peg as a follower as part of shell **850.** The inverse is possible as well, where helical inclined plane system may consist of an internal helical inclined plane on shell **850** with a single tooth or peg as a follower as part of body **805.** Gripping ribs **810** and **860** serve for applying hand-torque to the connector **800** during installation onto a coaxial cable and may be in any number of configurations that provides an improved grippable surface, such as a knurl, diamond or other suitable pattern. **Figure 13A** is a schematic end view of a component of connector **800** of **Figure 13** illustrating the plurality gripping ribs **860.**

Many modifications and other embodiments set forth herein will come to mind to one skilled in the art to which the embodiments pertain having the benefit of the teachings presented in the foregoing descriptions and the associated drawings. Therefore, it is to be understood that the description and claims are not to be limited to the specific embodiments disclosed and that modifications and other embodiments are intended to be included within the scope of the appended claims.

It is intended that the embodiments cover the modifications and variations of the embodiments. Although specific terms are employed herein, they are used in a generic and descriptive sense only and not for purposes of limitation.

## Claims

1. A coaxial cable connector (100, 100', 800) for coupling an end of a coaxial cable (8000) to a terminal, the coaxial cable (8000) comprising an inner conductor (8010), a dielectric (8020) surrounding the inner conductor (8010), an outer conductor (8040) surrounding the dielectric (8020), and a jacket (8050) surrounding the outer conductor (8040), the coaxial cable connector (100, 100', 800) comprising:
a body (400, 400') having an internal surface (415) extending between front and rear ends (410, 420) of the body (400, 400'), the internal surface (415) defining a longitudinal opening (425);
a retainer (300);
a ferrule (500, 500');
**characterized in that**
the ferrule (500, 500') has an outer surface (539) slidingly engaging at least a portion of the retainer (300) and at least a portion of the body (400, 400'), wherein the ferrule (500, 500') has at least one beam (515) and an inner surface (538) adapted to receive a coaxial cable (8000) inserted into the coaxial cable connector (100, 100', 800) and engage at least a portion of the outer conductor (8040) of the coaxial cable (8000), wherein the ferrule (500, 500') is configured to moved forward and the at least one beam (515) of the ferrule (500, 500') is configured to radially close about the outer conductor (8040) of the coaxial cable (8000) while the outer surface (539) of the ferrule (500, 500') remains in mechanical and electrical communication with the retainer (300) when the coaxial cable (8000) is received by the ferrule (500, 500'),
the coaxial cable connector (100, 100', 800) is post-less.

2. The coaxial cable connector of claim 1, wherein the at least one beam (515) includes a first pawl extending from the internal surface (538) of the ferrule (500) and having a first tooth (520), wherein the first tooth (520) is adapted to be driven into contact with the outer conductor (8040) of the coaxial cable (8000) when the at least one beam (515) closes about the coaxial cable (8000) providing mechanical retention and electrical communication between the first tooth (520) and the outer conductor (8040).

3. The coaxial cable connector of claim 2, wherein the at least one beam (515) comprises an extended portion, and wherein the extended portion includes a second tooth (520) extending from the internal surface (538) of the ferrule (500), and wherein the second tooth (520) is adapted to capture and grip the coaxial cable jacket (8050) when the at least one beam (515) closes about the coaxial cable (8000).

4. The coaxial cable connector of any of claims 1-3, wherein the at least one beam (515) comprises a plurality of beams.

5. The coaxial cable connector of any of claims 1-4, wherein the retainer (300) comprises a monolithic grounding flange (345).

6. The coaxial cable connector of any of claims 1-5, further comprising a shell (700, 700', 700") having an outer surface (750) and an internal surface (730), the internal surface (730) defining an opening (755) through the shell (700, 700', 700"), wherein the internal surface slidingly engages at least a portion of the rear end of the body (400, 400').

7. The coaxial cable connector of claim 6, further comprising a sealing ring (600) disposed within the shell (700, 700', 700") and engaging the rear end of the body (400, 400'), the sealing ring (600) having an internal surface, and wherein upon compression of the coaxial cable connector the sealing ring (600) is adapted to engage the jacket of the coaxial cable.

8. The coaxial cable connector of claim 7, wherein the shell (700, 700', 700") comprises splines adapted to grip the jacket of the coaxial cable and a plurality of flexible beams separated by slots, wherein the beams are adapted to provide a gripping action on the jacket of the coaxial cable while allowing the shell (700, 700', 700") to form to the contours of the body (400, 400').

## Patentansprüche

1. Koaxialkabelverbinder (100, 100', 800) zum Koppeln eines Endes eines Koaxialkabels (8000) an einen Anschluss, wobei das Koaxialkabel (8000) einen Innenleiter (8010), einen den Innenleiter (8010) umgebenden Nichtleiter (8020), einen den Nichtleiter (8020) umgebenden Außenleiter (8040) und einen den Außenleiter (8040) umgebenden Mantel (8050) umfasst, wobei der Koaxialkabelverbinder (100, 100', 800) Folgendes umfasst:
einen Körper (400, 400') mit einer Innenfläche (415), die sich zwischen dem vorderen Ende (410) des Körpers (400, 400') und dessen hinterem Ende (420) erstreckt, wobei die Innenfläche (415) eine Längsöffnung (425) definiert;
einen Halter (300);
eine Ferrule (500, 500');
**dadurch gekennzeichnet, dass**
die Ferrule (500, 500') eine Außenfläche (539) aufweist, die gleitend in mindestens einen Abschnitt des Halters (300) und mindestens einen Abschnitt des Körpers (400, 400') eingreift, wobei die Ferrule (500, 500') mindestens einen Balken (515) und eine Innenfläche (538) aufweist, angepasst, um ein in den Koaxialkabelverbinder (100, 100', 800) eingeführtes Koaxialkabel (8000) aufzunehmen und in mindestens einen Abschnitt des Außenleiters (8040) des Koaxialkabels (8000) einzugreifen, wobei die Ferrule (500, 500') so ausgelegt ist, dass sie nach vorn geschoben wird, und der mindestens eine Balken (515) der Ferrule (500, 500') so ausgelegt ist, dass er den Außenleiter (8040) des Koaxialkabels (8000) radial umschließt, während die Außenfläche (539) der Ferrule (500, 500') in mechanischer und elektrischer Kommunikation mit dem Halter (300) bleibt, sobald das Koaxialkabel (8000) von der Ferrule (500, 500') aufgenommen wird,
der Koaxialkabelverbinder (100, 100', 800) pfostenlos ist.

2. Koaxialkabelverbinder nach Anspruch 1, wobei der mindestens eine Balken (515) eine erste Klinke, die sich von der Innenfläche (538) der Ferrule (500) her erstreckt und einen ersten Zahn (520) aufweist, enthält, wobei der erste Zahn (520) so angepasst ist, dass er in Kontakt mit dem Außenleiter (8040) des Koaxialkabels (8000) getrieben wird, sobald der mindestens eine Balken (515) das Koaxialkabel (8000) umschließt, wodurch ein mechanischer Halt und eine elektrische Kommunikation zwischen dem ersten Zahn (520) und dem Außenleiter (8040) bereitgestellt werden.

3. Koaxialkabelverbinder nach Anspruch 2, wobei der mindestens eine Balken (515) einen verlängerten Abschnitt umfasst, wobei der verlängerte Abschnitt einen zweiten Zahn (520), der sich von der Innenfläche (538) der Ferrule (500) her erstreckt, aufweist und wobei der zweite Zahn (520) so angepasst ist, dass er den Koaxialkabelmantel (8050) erfasst und festhält, sobald der mindestens eine Balken (515) das Koaxialkabel (8000) umschließt.

4. Koaxialkabelverbinder nach einem der Ansprüche 1-3, wobei der mindestens eine Balken (515) eine Vielzahl von Balken umfasst.

5. Koaxialkabelverbinder nach einem der Ansprüche 1-4, wobei der Halter (300) einen monolithischen Erdungsflansch (345) umfasst.

6. Koaxialkabelverbinder nach einem der Ansprüche 1-5, der ferner eine Umhüllung (700, 700', 700") mit einer Außenfläche (750) und einer Innenfläche (730) umfasst, wobei die Innenfläche (730) eine Öffnung (755) durch die Umhüllung (700, 700', 700") definiert, wobei die Innenfläche gleitend in mindestens einen Abschnitt des hinteren Endes des Körpers (400, 400') eingreift.

7. Koaxialkabelverbinder nach Anspruch 6, der ferner einen innerhalb der Umhüllung (700, 700', 700") positionierten und in das hintere Ende des Körpers (400, 400') eingreifenden Dichtring (600) umfasst, wobei der Dichtring (600) eine Innenfläche aufweist und wobei der Dichtring (600) so angepasst ist, dass er beim Zusammendrücken des Koaxialkabelverbinders in den Mantel des Koaxialkabels eingreift.

8. Koaxialkabelverbinder nach Anspruch 7, wobei die Umhüllung (700, 700', 700") Keile, die so angepasst sind, dass sie den Mantel des Koaxialkabels festhalten, und eine Vielzahl biegsamer Balken, die durch Schlitze getrennt sind, umfasst, wobei die Balken so angepasst sind, dass sie einen Festhaltevorgang auf dem Mantel des Koaxialkabels bereitstellen, während sie zulassen, dass sich die Umhüllung (700, 700', 700'') der Form des Körpers (400, 400') angleicht.

## Revendications

1. Connecteur (100, 100', 800) de câble coaxial destiné à accoupler une extrémité d'un câble coaxial (8000) à une borne, le câble coaxial (8000) comprenant un conducteur intérieur (8010), un diélectrique (8020) entourant le conducteur intérieur (8010), un conducteur extérieur (8040) entourant le diélectrique (8020) et une gaine (8050) entourant le conducteur extérieur (8040), le connecteur (100, 100', 800) de câble coaxial comprenant :
un corps (400, 400') présentant une surface interne (415) s'étendant entre des extrémités avant et arrière (410, 420) du corps (400, 400'), la surface interne (415) définissant une ouverture longitudinale (425) ;
un élément de retenue (300) ;
une ferrule (500, 500') ;
**caractérisé en ce que**
la ferrule (500, 500') présente une surface extérieure (539) venant en prise à coulissement avec au moins une partie de l'élément de retenue (300) et au moins une partie du corps (400, 400'), la ferrule (500, 500') présentant au moins une poutre (515) et une surface intérieure (538) adaptées à recevoir un câble coaxial (8000) introduit dans le connecteur (100, 100', 800) de câble coaxial et venir en prise avec au moins une partie du conducteur extérieur (8040) du câble coaxial (8000), la ferrule (500, 500') étant configurée pour s'avancer et l'au moins une poutre (515) de la ferrule (500, 500') étant configurée pour se refermer radialement autour du conducteur extérieur (8040) du câble coaxial (8000) tandis que la surface extérieure (539) de la ferrule (500, 500') reste en liaison mécanique et électrique avec l'élément de retenue (300) lorsque le câble coaxial (8000) est reçu par la ferrule (500, 500'),
le connecteur (100, 100', 800) de câble coaxial est dépourvu de fût.

2. Connecteur de câble coaxial selon la revendication 1, dans lequel l'au moins une poutre (515) comporte un premier cliquet s'étendant depuis la surface interne (538) de la ferrule (500) et présentant une première dent (520), la première dent (520) étant adaptée à être amenée au contact du conducteur extérieur (8040) du câble coaxial (8000) lorsque l'au moins une poutre (515) se referme autour du câble coaxial (8000) en assurant une retenue mécanique et une liaison électrique entre la première dent (520) et le conducteur extérieur (8040).

3. Connecteur de câble coaxial selon la revendication 2, dans lequel l'au moins une poutre (515) comprend une partie étendue, et dans lequel la partie étendue comporte une deuxième dent (520) s'étendant depuis la surface interne (538) de la ferrule (500), et dans lequel la deuxième dent (520) est adaptée à piéger et agripper la gaine (8050) du câble coaxial lorsque l'au moins une poutre (515) se referme autour du câble coaxial (8000).

4. Connecteur de câble coaxial selon l'une quelconque des revendications 1 à 3, dans lequel l'au moins une poutre (515) comprend une pluralité de poutres.

5. Connecteur de câble coaxial selon l'une quelconque des revendications 1 à 4, dans lequel l'élément de retenue (300) comprend une bride de mise à la terre monolithique (345).

6. Connecteur de câble coaxial selon l'une quelconque des revendications 1 à 5, comprenant en outre une coque (700, 700', 700") présentant une surface extérieure (750) et une surface interne (730), la surface interne (730) définissant une ouverture (755) à travers la coque (700, 700', 700"), la surface interne venant en prise à coulissement avec au moins une partie de l'extrémité arrière du corps (400, 400').

7. Connecteur de câble coaxial selon la revendication 6, comprenant en outre une bague d'étanchéité (600) placée à l'intérieur de la coque (700, 700', 700") et venant en prise avec l'extrémité arrière du corps (400, 400'), la bague d'étanchéité (600) présentant une surface interne, et dans lequel, lors de la compression du connecteur de câble coaxial, la bague d'étanchéité (600) est adaptée à venir en prise avec la gaine du câble coaxial.

8. Connecteur de câble coaxial selon la revendication 7, dans lequel la coque (700, 700', 700") comprend des cannelures adaptées à agripper la gaine du câble coaxial et une pluralité de poutres souples séparées par des fentes, les poutres étant adaptées à exercer une action d'agrippage sur la gaine du câble coaxial tout en permettant à la coque (700, 700', 700") d'épouser les contours du corps (400, 400').
